# EUROPEAN PATENT APPLICATION

(11) **EP 0 620 533 A2**
(43) Date of publication of application: **19.10.1994**
(21) Application number: 94105716.8
(22) Date of filing: 13.04.1994
(51) Int. Cl.: G06F 15/78

(54) **Vector processor**

(30) Priority: 13.04.1993 JP 85812/93
(71) Applicant: NEC CORPORATION, Tokyo (JP)
(72) Inventor: Fujiwara, Yoshifumi, Minato-ku, Tokyo (JP); Siyo, Tae, Koufu-shi, Yamanashi (JP)
(74) Representative: Betten & Resch

(57) **Abstract**

For a set of addresses of list vectors output from an address buffer (8), a coincidence between the set and another set and a coincidence between the set and a set of addresses of preceding accesses held in preceding address holding registers (2003-2006) in an address coincidence detector (20) are detected by address comparator circuits (2007-2010) in the address coincidence detector (20). Information from the address coincidence detector (20) is held in a coincidence information holding circuit (21) and output to a controller (5) and a bank manager (19). The bank manager (19) estimates possibility of occurrence of bank conflict. The controller (5) controls a crossbar (13) and selectors (9-12) such that accesses having coincident addresses are omitted and only requests having addresses which are not coincident are sent to a storage (18). A data switch circuit (26) includes preceding data holding registers (2602-2605) respectively corresponding to preceding address holding registers (2002-2005) and selects data corresponding to the omitted accesses from the preceding data holding registers (2602-2605) on the basis of address coincidence information held in the coincidence information holding circuit (21).

## Description

### BACKGROUND OF THE INVENTION

The present invention relates to a vector processor and, particularly, to a vector processor with memory access control in the so-called list vector processing in which memory access is performed using respective elements of vector data as addresses.

In a vector processor, when a list vector function is assigned, respective elements of a vector data are deemed as addresses and used to access a memory. It is possible to set in the list vector arbitrary values as respective addresses of the vector data. Therefore, addresses may be random or continuous.

On the other hand, in a vector processor, in order to improve throughput, it is usual to use a memory divided into a plurality of memory banks. In such banked memory, it is possible to obtain high throughput when different banks are accessed successively. However, when an access is performed to a certain bank, a succeeding access must wait for a constant time from the preceding access.

In order to solve such problem inherent to the list vector, various systems have been proposed. One of such proposals is disclosed in EP 0232827. In the disclosed proposal, when an address as one element of a list vector coincides with an address of another element which is immediately preceding the one element, the later access is converted into a dummy request which does not produce a bank conflict. After the dummy request is executed, data of the preceding element is used as data of the succeeding access.

In the prior art, address comparison is performed only between addresses of one element and another element which is immediately preceding the one element in the list vector access. Therefore, no effect can be obtainable in case that the same address is accessed every two elements. Further, since, in the disclosed system, one access is allowed at one time, there is a problem that a band width of memory access is restricted.

Further, in the prior art system, since the dummy request is issued even when an address coincidence is detected, there may be a bank conflict of a succeeding request. That is, in the disclosed prior art, address is generated by a random number generator in order to prevent such bank conflict of the address of the dummy request. However, this scheme is to avoid bank conflict of the preceding access and there is no consideration taken in for succeeding access.

As mentioned, field to which the conventional system is applicable is very limited and, in addition thereto, there is a problem in performance that new bank conflict may occur.

An object of the present invention is to restrain occurrence of access to an address which coincides with those of a plurality of preceding accesses.

Another object of the present invention is to restrain occurrence of access to an address which coincides with those of a plurality of preceding accesses when a plurality of elements of a list vector are issued simultaneously.

A further object of the present invention is to prevent undesired bank conflict from occurring by not issuing unnecessary access.

### SUMMARY OF THE INVENTION

In a preferred embodiment, a vector processor according to the present invention which includes a storage constituted with a plurality of memory banks and a vector processor having function of accessing the storage using vector data as address for generating a memory access request, characterized in that the vector processor comprises: an address coincidence detector for holding address history of a plurality of preceding memory accesses from the vector processor and detecting a coincidence of addresses of the plurality of preceding memory accesses with addresses of succeeding memory accesses; a request switch circuit for supplying to the storage only memory accesses whose address coincidence are not detected by the address coincidence detector; and a data switch circuit for holding a history of data from the storage correspondingly to the plurality of preceding memory accesses held in the address coincidence detector, supplying data held as the data history for memory accesses whose address coincidence is detected by the address coincidence detector to the vector processor and supplying data from the storage for memory accesses whose address coincidence is not detected by the address coincidence detector to the vector processor.

### BRIEF DESCRIPTION OF THE DRAWINGS

The present invention will becomes more apparent by reference to the following detailed description of the present invention taken in conjunction with the accompanying drawings, wherein:
Fig. 1 is a block diagram of a vector processor, for explaining a preferred embodiment of the present invention;
Fig. 2 shows a configuration of a request register 2;
Fig. 3 shows a configuration of physical address in the embodiment;
Fig. 4 shows a construction of an address coincidence detector 20;
Fig. 5 is a table showing a control operation of a priority encoder;
Fig. 6 shows a construction of a data switch circuit 26;
Fig. 7 is a table showing a control operation of selectors 2606 - 2609;
Fig. 8 shows a state of a coincidence information holding circuit 21;
Fig. 9 shows another construction of the address coincidence detector 20;
Fig. 10 shows another construction of the data switch circuit 26; and
Fig. 11 shows states of data holding registers 2003 - 2006.

### DETAILED DESCRIPTION OF THE PREFERRED EMBODIMENTS

Embodiments of the present invention will be described in detail with reference to the drawings.

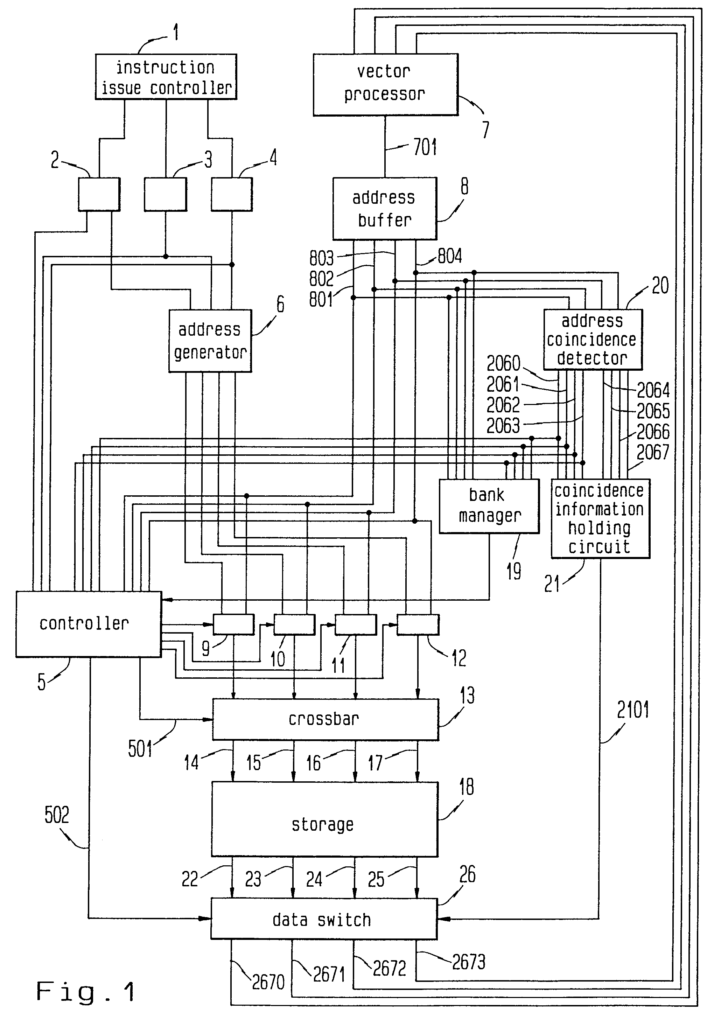

Referring to Fig. 1, an instruction issue controller 1 in a first embodiment of a vector processor according to the present invention issues all instructions to be executed in the vector processor. A request register 2 holds type of memory access and number of vector elements every memory access request from the instruction issue controller 1. A start address register 3 holds an address of a header element of a memory access, that is, a start address. A distance register 4 holds an address distance between vector elements. An address generator 6 generates addresses of a required number of elements according to the number of vector elements in the request register 2, each address being composed of a start address of the start address register 3 and an address distance of the distance register 4, for a memory access of constant distance vector. A vector processor 7 generates addresses necessary for vector operations and list vector access. An address buffer 8 holds list vector. A bank manager 19 checks bank conflict during memory access by list vector. An address coincidence detector 20 detects a coincidence between list vector addresses. A coincidence information holding circuit 21 holds a correspondence between vector elements having coincident addresses. Selectors 9-12 each selects either constant distance vector address or list vector address. Each memory request is not arranged correspondingly to each memory access port at a time when outputs are obtained at output terminals of the selectors 9-12. A crossbar 13 is a multi-input/multi-output switch circuit for sending addresses from the selectors 9-12 to suitable memory access ports 14-17. The memory access ports 14-17 function to supply addresses from the crossbar 13 to a storage 18. A data switch circuit 26 is a multi-input/multi-output switch circuit for switching data from the storage 18 such that a sequence of memory requests at the time when outputs are obtained at the output terminals of the selectors 9-12 is recovered. A controller 5 controls the selectors 9-12, the crossbar 13 and the data switch circuit 26. For simplicity of description, it is assumed in this embodiment that the storage 18 has 16 memory banks so that there are 4 memory banks per memory port. However, such number of memory banks does not constitute any limitation of the present invention.

An operation for constant distance vector access to the storage 18 will be described.

In the case of constant distance vector access, a memory access request and the number of vector elements from the instruction issue controller 1 are held in the request register 2. Simultaneously therewith, a start address and a distance are held in the start address register 3 and the distance register 4, respectively. The memory access request held in the request register 2 is sent to the controller 5 and the vector element number held in the request register 2 is sent to the address generator 6. The start address held in the start address register 3 and the distance held in the distance register 4 are sent to the address generator 6. Simultaneously therewith, only port address parts of the start address and the distance are sent to the controller 5. The address generator 6 generates a required number of effective addresses from the start address and the distance according to the number of vector elements. The respective effective addresses, after selected by the selectors 9-12, are switched to destined memory access ports 14-17 by the crossbar 13. Thereafter, the respective effective addresses are sent through the memory access ports 14-17 to the storage 18. In this case, the crossbar 13 is controlled by the controller 5 on the basis of the start address and the distance. Such control of the crossbar in such constant distance vector is performed by a known technique. For example, U.S. patent No. 5,251,309 issued to Kinoshita et al. on October 5, 1993 discloses a technique related to a memory access timing control in continuous vector access.

Now, an operation for a list vector access to the storage 18 will be described.

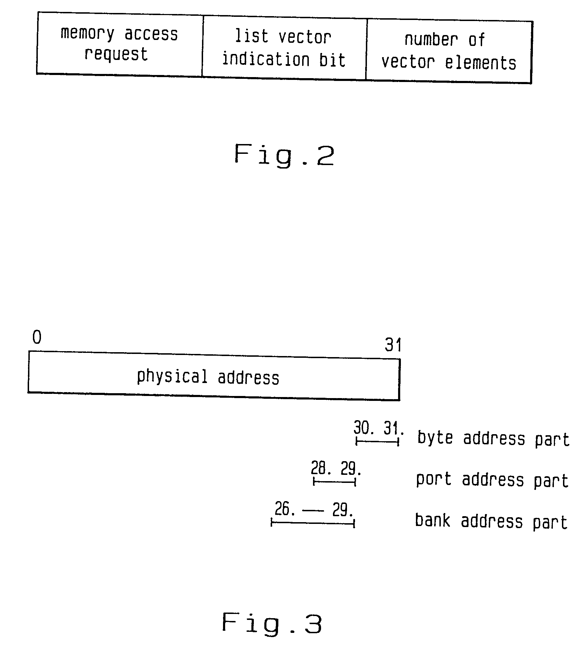

In the case of list vector access, a memory access request, the number of vector elements and a list vector access indication all from the instruction issue controller 1 are held in the request register 2. These requests from the instruction issue controller 1 are stored in the request register 2 as shown in Fig. 2. Simultaneously with the instruction issue from the instruction issue controller 1, effective addresses of respective elements of the list vector, that is, list vector addresses, are sent from the vector processor 7 to the address buffer 8. The list vector addresses from the address buffer 8 are sent to the selectors 9-12 and the address coincidence detector 20 by maximum number of memory accessible elements, in this embodiment, 4 elements, as a unit. Further, among the list vector addresses, only bank address part shown in Fig. 3 is sent to the bank manager 19. Further, among the list vector addresses, only port address part (see Fig. 3) corresponding to the memory access ports 14-17 are sent to the controller 5. As mentioned previously, for simplicity of explanation, it is assumed in this embodiment that the storage 18 is composed of 16 memory banks and there are 4 memory banks per memory port. Therefore, as shown in Fig. 3, the 26th to 29th bits of a physical address represent a bank address in which the 28th and 29th bits represent port address.

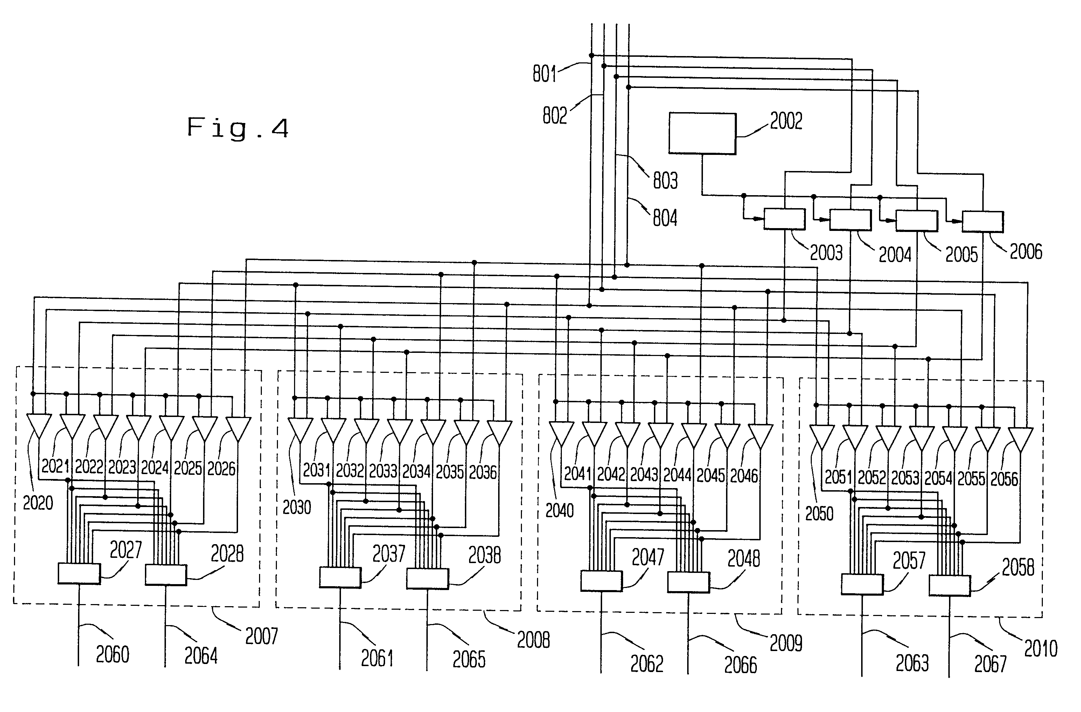

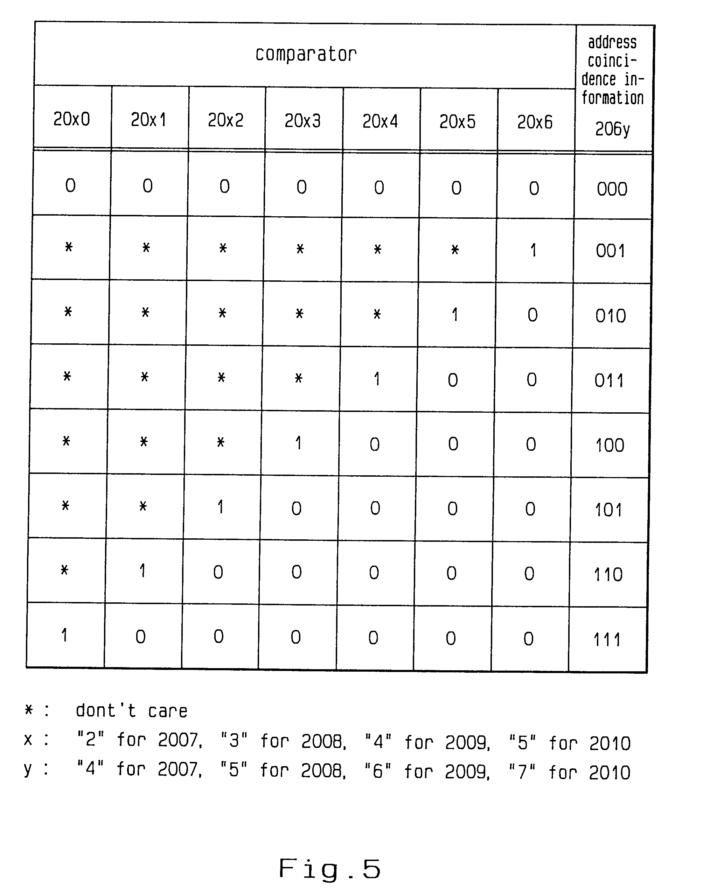

Referring to Fig. 4, the address coincidence detector 20 is composed of preceding address holding registers 2003-2006 which operate under control of an address holding manager 2002 and address comparators 2007-2010 for comparing effective addresses stored in the preceding address holding registers 2003-2006 with list vector addresses from the address buffer 8. The list vector addresses from the address buffer 8 are sent to the preceding address holding registers 2003-2006 and the address comparators 2007-2010. The address comparators 2007-2010 compare the list vector addresses input from the address buffer 8 with addresses held in the preceding address holding registers 2003-2006. respectively. Simultaneously therewith, they compare list vector addresses input from the address buffer 8 with each other and send a result of comparison to OR circuits 2027, 2037, 2047 and 2057 and to the priority encoders 2028, 2038, 2048 and 2058 according to connections shown in Fig. 4. The OR circuit 2027 in the address comparator 2007 reports "1", when there is any of outputs of comparators 2020-2026 which indicates a coincidence, and "0", when there is no coincidence, to the controller 5, the bank manager 19 and the coincidence information holding circuit 21, as an address coincidence detection signal 2060. Similarly, the OR circuits 2037, 2047 and 2057 of the address comparators 2008, 2009 and 2010 report "1", when there is any of outputs of comparators 2020-2026, 2040-2046 and 2050-2056 which indicates a coincidence, and "0", when there is no coincidence, to the controller 5, the bank manager 19 and the coincidence information holding circuit 21, as address coincidence detection signals 2061-2063, respectively. The priority encoder 2028 of the address comparator 2007 outputs the address coincidence information 2064-2067 to the coincidence information holding circuit 21 on the basis of results of comparison from the comparators 2020-2026, according to the synopsis shown in Fig. 5.

Fig. 5 shows a relation between the outputs of the respective comparators and the address coincidence information. In Fig. 5, a letter x is "2" for the address comparator 2007, "3" for the address comparator 2008, "4" for the address comparator 2009 and "5" for the address comparator 2010. A letter y is "4" for the address comparator 2007, "5" for the address comparator 2008, "6" for the address comparator 2009 and "6" for the address comparator 2010. Therefore, for, for example, the address comparator 2007, if all of the comparators 2020-2026 output "0", the address coincidence information 2064 becomes "000".

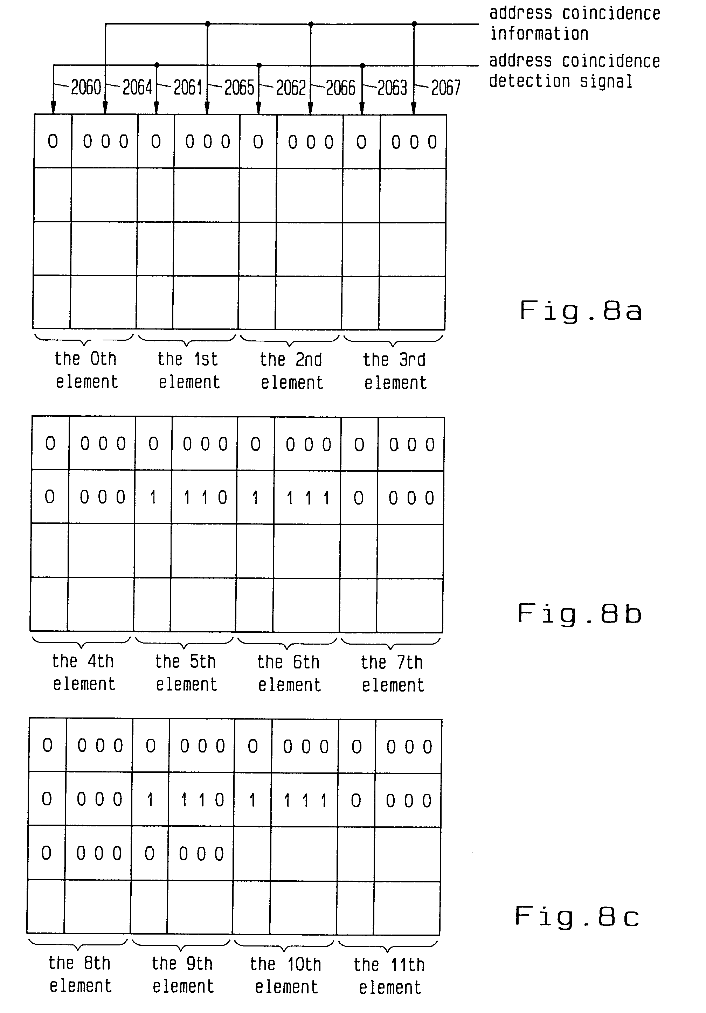

Referring to Fig. 8, the coincidence information holding circuit 21 takes in the form of a buffer having a plurality of entries and stores the address coincidence detection signals 2060-2063 and the address coincidence information 2064-2067 from the address coincidence detector 20. The address coincidence detection signals and the address coincidence information are output to the data switch circuit 26 as address coincidence detection signals 2160-2163 and address coincidence information 2164-2167 and used as data control information for memory access to the storage 18 as will be described later. The address coincidence detection signals and the address coincidence information will be referred to as an address coincidence information set 2101.

The bank manager 19 checks whether or not list vector address from the address buffer 8 causes a bank conflict. A check result related only to a request whose address is not coincident in view of the address coincidence result from the address coincidence detector 20 is reported to the controller 5. A bank conflict management of the bank manager 19 is performed by a known technique for holding a bank.access history. In this regard, U.S. patent No. 4,435,765 issued to Uchida et al. on March 6, 1984 discloses a bank slot reserve control circuit for holding a bank access history. "1" is sent to the controller 5 together with respective addresses from the address buffer 8 when a result of the bank conflict check indicates that a bank conflict occurs and "0" is sent thereto together with respective addresses when the result of the bank conflict check indicates that a bank conflict does not occur.

After the controller 5 receives the memory access request from the request register 2 and receives a list vector access indication, the controller 5 suppoies only list vector addresses for which it is guaranteed on the basis of the bank conflict information from the bank manager 19 and the address coincidence result from the address coincidence detector 20 that there is no bank conflict and no address coincidence through the selectors 9-12 to the crossbar 13. These addresses supplied to the crossbar 13 are also stored in the preceding address holding registers 2003-2006.

Since, in the embodiment, the maximum number of access elements accessible to the storage 18 simultaneously is the same as the number of list vector addresses held in the preceding address holding registers, that is, "4", lines 801-804 are connected directly to the address holding registers 2003-2006, respectively, as shown in Fig. 4. It may be possible in order to change the number of preceding addresses held in the preceding address holding registers to provide address switch circuits in input sides of the respective preceding address holding registers 2003-2006.

The controller 5 controls the crossbar 13 according to an information of the port address part of the list vector address from the address buffer 8 to an access to the storage 18 through the memory address ports 14-17. Data read out from the storage 18 are supplied from memory read ports 22-25 to the data switch circuit 26.

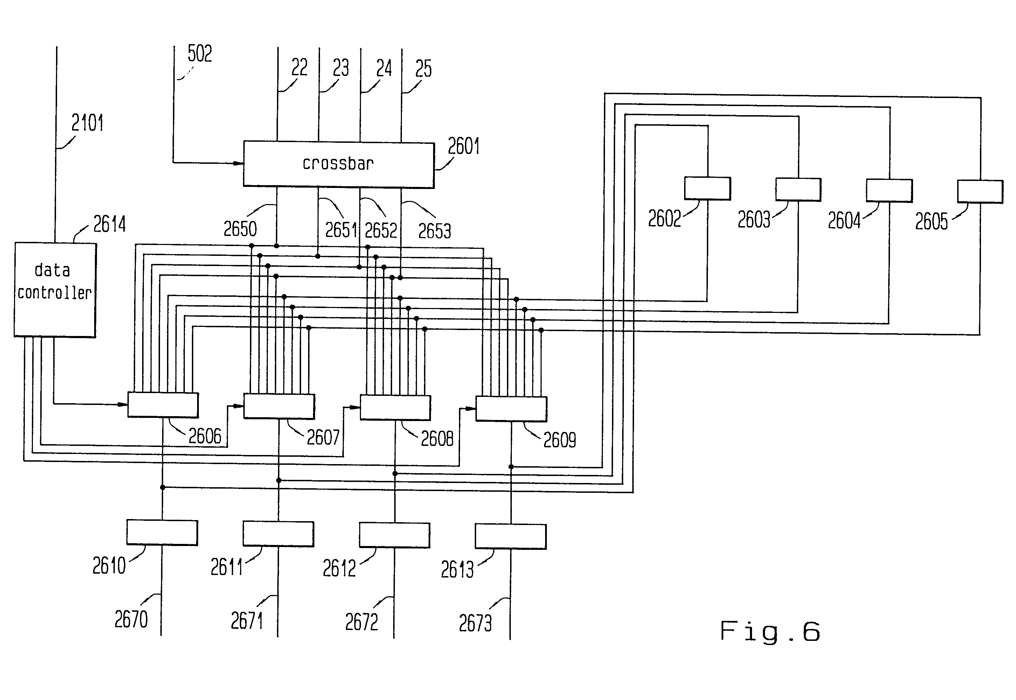

Referring to Fig. 6, the data switch circuit 26 comprises a crossbar 2601 in an input side thereof, selectors 2606-2609 for selecting outputs of the crossbar 2601 under control of a data controller 2614, data registers 2610-2613 connected to the vector processor 7 and preceding data holding registers 2602-2605 for holding preceding data sent to the vector processor 7. The controller 5 holds a correspondence between respective input data and the memory read ports, switches data from the storage 18 by the crossbar 2601 and supplies them to the selectors 2606-2609. That is, output data 2650-2653 from the crossbar 2601 corresponds to the addresses 801-804, respectively. The selectors 2606-2609 select data on the basis of the address coincidence information from the coincidence information holding circuit 21 under control of the data controller 2614 and send them to the preceding data holding registers 2602-2605.

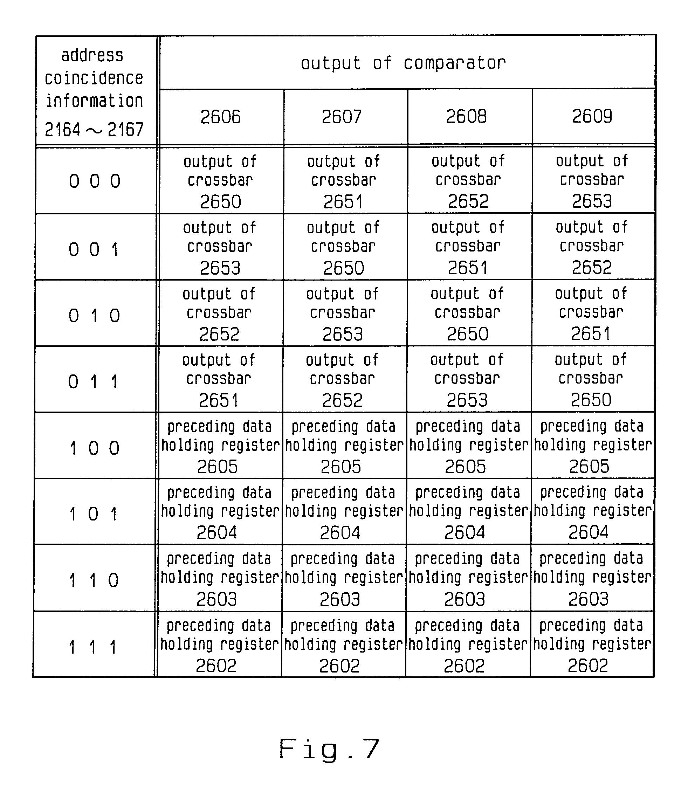

Fig. 7 shows how to control the selectors 2606-2609 by the data controller 2614. Address coincidence information 2164-2166 are used to control the selectors 2606-2609, respectively. For example, if the address coincidence information 2164 is "000", the selector 2606 selects the 0th output 2650 from outputs of the crossbar 2601. The preceding data holding registers 2602-2605 correspond to the preceding address holding registers 2003-2006, respectively. It may be possible in order to change the number of preceding addresses held in the preceding address holding registers to provide address switch circuits in input sides of the respective preceding address holding registers 2602-2605.

Data from the data registers 2610-2613 are supplied to the vector processor 7 and the processing is completed.

An operation of the list vector processing in the described embodiment will described in detail for a case where vector length in the list vector is "10" and addresses of the respective elements are, from the 0th element, "00B10#", "00B14#", "00B18#", "00B1C", "00B20#", "00B14#", "00B10#", "00B24#", "00B28#" and "00B2C#", where # indicates a hexadecimal number.

First, a memory access request, a list access indication and a vector element number "10" are set in the request register 2 by the instruction issue controller 1. Simultaneously therewith, list vector addresses from the vector processor 7 are stored in the address buffer 8 sequentially. The list vector addresses are read out from the address buffer 8 by 4 elements. That is, 4 elements "00B10#", "00B14#", "00B18#" and "00B1C" are read first, 4 elements "00B20#", "00B14#", "00B10#" and "00B24#" are read second and, lastly, 2 elements "00B28#" and "00B2C#" are read. The addresses from the address buffer 8 are sent to the selectors 9-12 and the address coincidence detector 20, the bank address parts "0100Z", "0101Z", "0110Z" and "0111Z" are sent to the bank manager 19 and the port address parts "00Z", "01Z", "10Z" and "11Z" are sent to the controller 5, where "Z" indicates a binary number.

When the address coincidence detector 20 receives addresses from the address buffer 8, an address comparison is performed by the address comparators 2007-2010. It is assumed, here, that address information of a preceding memory access is not held as yet. Since there is no address to be compared in the address comparator 2007 which detects the address coincidence of the 0th element, there is no coincidence output from the comparators 2020-2026. Therefore, the OR circuit 2027 outputs "0" and the priority encoder 2028 outputs "000". Since the address comparator 2026 which detects an address coincidence between the 1st element and the 0th element does not provide a coincidence output, the OR circuit 2037 of the address comparator 2008 outputs "0" and the priority encoder 2038 outputs "000". Similarly, the address comparator 2009 compares address of the 2nd element with addresses of the 0th and 1st elements and the comparator 2010 compares address of the 3rd element with addresses of the 0th, 1st and 2nd elements. Since there is no coincidence obtained from the address comparators 2008-2010, the OR circuits 2047 and 2057 output "0", respectively, and the priority encoders 2048 and 2058 output "000", respectively. The outputs of the OR circuits 2027, 2037, 2047 and 2057 are sent to the bank manager 19, the controller 5 and the coincidence information holding circuit 21, as the address coincidence detection signals 2060-2063. Further, the outputs of the priority encoders 2028, 2038, 2048 and 2058 are sent to the coincidence information holding circuit 21 as the address coincidence information 2064-2067. The coincidence information holding circuit 21 holds the address coincidence detection signals 2060-2063 and the address coincidence information 2064-2067. Fig. 8(a) shows the content of the coincidence information holding circuit 21 in the latter case.

The bank manager 19 knows through the above-mentioned procedures that there is no address in the addresses for 4 elements from the address buffer 8, which is detected as coincidence by the address coincidence detector 20. Thereafter, all of the 4 elements are checked as to whether or not there is a bank conflict. It is assumed, here, that an enough time lapses from a preceding memory access. Since the bank numbers indicated by the addresses of the 4 elements are "0100Z", "0101Z", "0110Z" and "0111Z" and thus it can be judged that there is no bank conflict, an information of "no bank conflict" is sent to the controller 5.

The controller 5 selects all of the 4 elements by the selectors 9-12 on the basis of the outputs of the bank manager 19 and the address coincidence detector 20 and controls the crossbar 13 to perform the memory access according to the port address parts (see Fig. 3) of the respective list vector addresses. Simultaneously therewith, the addresses of the 4 elements, the 0th element, the 1st element, the 2nd element and the 3rd element, are sent to and stored in the address holding registers 2003, 2004, 2005 and 2006, respectively.

After the processing for the initial 4 elements is completed, next 4 elements "00B20#", "00B14#", "00B10#" and "00B24#" are read out and compared in address by the address coincidence controller 20.

That is, in the address comparator 2007, the 4th element address "00B20#" is compared with the respective 0th to 3rd element addresses held in the address holding registers 2003-2006. Since there is no coincidence, the OR circuit 2027 outputs "0" and the priority encoder 2028 outputs "000Z". In the address comparator 2008, the 5th element address "00B14#" is compared with the respective addresses of the 0th to 3rd elements held in the address holding registers 2003-2006 as well as the 4th element. In this case, the comparator 2031 detects that the address "00B14#" of the 5th element coincides with the address of the 1st element held in the address holding register 2004. Thus, the OR circuit 2037 outputs "1" and the priority encoder 2038 outputs "110Z". In the address comparator 2009, the 6th element address "00B10#" is compared with the respective addresses of the 0th to 3rd elements held in the address holding registers 2003-2006 as well as the 4th and 5th elements. In this case, the comparator 2040 detects that the address "00B10#" of the 6the element coincides with the address of the 0th element held in the address holding register 2003. Thus, the OR circuit 2047 outputs "1" and the priority encoder 2048 outputs "111Z". In the address comparator 2010, the 7th element address "00B24#" is compared with the respective addresses of the 0th to 3rd elements held in the address holding registers 2003-2006 as well as the 4th-6th elements. Since, in this case, there is no address coincidence detected, the OR circuit 2057 outputs "0" and the priority encoder 2058 outputs "000Z". The above-mentioned results of address comparison are sent to the controller 5, the bank manager 19 and the coincidence information holding circuit 21 as in the same manner to that in the processing of the preceding 4 elements. A state of the coincidence information holding circuit 21 in this case is shown in Fig. 8(b).

The bank manager 19 reports to the controller 5 that the bank addresses "1000Z" and "1001Z" of the 4th and 7th elements do not coincide with the bank addresses of the preceding 4 elements, on the basis of the address coincidence signals from the address coincidence detector 20.

The controller 5 controls the selectors 9 and 12 to select the addresses of the 4th and 7th elements, respectively, on the basis of the outputs of the address coincidence detector 20 and the bank manager 19 and controls the crossbar 13 to perform a memory access to these addresses. Simultaneously therewith, the addresses of the 4th to 7th elements are stored in the address holding registers 2003, 2004, 2005 and 2006, respectively.

Finally, when addresses of the 8th and 9th elements are sent from the address buffer 8, an address comparison similar to the above-mentioned is performed by the address coincidence detector 20. That is, in the address comparator 2007, the 8th element address "00B28#" is compared with the respective addresses of the 4th to 7th elements held in the address holding registers 2003-2006. Since, in this case, there is no address coincidence, the OR circuit 2027 outputs "0" and the priority encoder 2028 outputs "000Z". The address "00B2C#" of the 9th element is compared in the address comparator 2008 with the addresses of the 4th-7th elements held in the address holding registers 2003-2006 as well as the 8th element. Since, in this case, there is no address coincidence, the OR circuit 2037 outputs "0" and the priority encoder 2038 outputs "000Z". The above-mentioned results of address comparison are sent to the controller 5, the bank manager 19 and the coincidence information holding circuit 21. A state of the coincidence information holding circuit 21 in this case is shown in Fig. 8(c).

The bank manager 19 confirms, on the basis of the output of the address coincidence detector 20, that the bank addresses of the 8th and 9th elements are "1010Z" and "1011Z", respectively, and detects that there is no bank conflict.

The controller 5 controls the selectors 9 and 10 to select the addresses of the 8th and 9th elements, respectively, on the basis of the outputs of the address coincidence detector 20 and the bank manager 19 and controls the crossbar 13 to perform a memory access to these addresses.

The addresses of the first 4 elements read out from the storage 18 are read out from the memory ports 22-25 and sent to the data switch circuit 26. The data switch circuit 26 switches, through the crossbar 2601, the data from the storage 18 under control of the controller 5. The data of the 0th to 3rd elements are sent from the output ports 2650-2653 to the selectors 2606-2609, respectively.

The data controller 2614 controls the selectors 2606-2609 in the following manner on the basis of the address coincidence information set 2101 from the coincidence information holding circuit 21. The data controller 2614 divides the address coincidence information set 2101 into address coincidence information 2164-2167 and decodes the latter sequentially from a more preceding element. First, since the address coincidence information 2164 of the 0th element is "000Z", the data of the 0th element is selected by the selector 2606 according to the content shown in Fig. 7. Similarly, since the address coincidence information 2156-2167 of the 1st-3rd elements are all "000Z", the data of the 1st-3rd elements are selected by the selector 2607-2609. The data thus selected are stored in the data registers 2610-2613 as well as the preceding data holding registers 2602-2605. The data of the data registers 2610-2613 are then sent to the vector processor 7.

Among the data of the 4th-7th elements, only the data of the 4th and 7th elements are read out from the storage 18. The data of the 4th element and the 7th element are sent to the output ports 2650 and 2653 by the crossbar 2601, respectively. The data controller 2614 controls the selectors 2606-2609 in the following manner on the basis of the address coincidence information 2164-2167 from the coincidence information controller 21. That is, since the address coincidence information 2164 and 2167 of the 4th and 7th elements are "000Z", the data from the crossbar 2601 of the 4th and 7th elements are selected by the selectors 2606 and 2609 according to the content shown in Fig. 7. Further, since the address coincidence information 2165 of the 5th element is "110Z", the data of the 1st element of the preceding data holding register 2603 is selected by the selector 2607. Similarly, since the address coincidence information 2166 of the 6th element is "111E", the data of the 0th element of the preceding data holding circuit 2602 is selected. The data from the selectors 2606-2609 are stored in the data registers 2610-2613 as well as the preceding data holding registers 2602-2605. The data of the data registers 2610-2613 are then sent to the vector processor 7.

The data of the 8th and 9th elements are read out from the storage 18 and sent to the output ports 2650 and 2651 by the crossbar 2601, respectively. Since, in this case, the address coincidence information 2164 and 2165 of the 8th and 9th elements are "000Z", the selectors 2606 and 2607 select the data of the 8th and 9th elements, respectively. The data thus selected are then sent to the vector processor 7 through the data registers 2610 and 2611, respectively, and the memory access processing is completed.

Now, a second embodiment of the present invention will be described. The second embodiment is featured over the first embodiment in that identical addresses are prevented from being registered in the address holding registers 2003-2006 in the address coincidence detector 20.

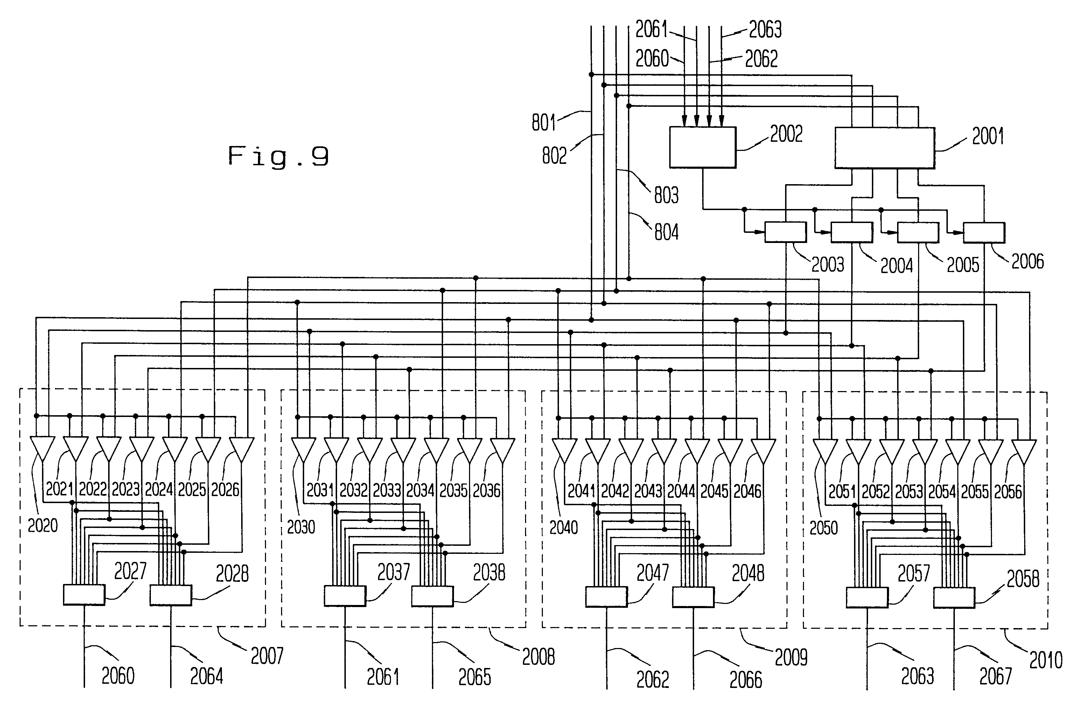

Referring to Fig. 9 which shows the second embodiment, the address coincidence detector 20 is provided with an address switch circuit 2001 to make input addresses possible to be stored in arbitrary one or ones of the preceding address holding registers 2003-2006.2003-2006. A control for holding new addresses is performed in the address holding registers 2003-2006 by inputting the comparison results 2060-2063 from the address comparators 2007-2010 to a preceding address holding register manager 2002. With such construction, it becomes possible to operate such that identical addresses are not registered in the address holding registers 2003-2006.

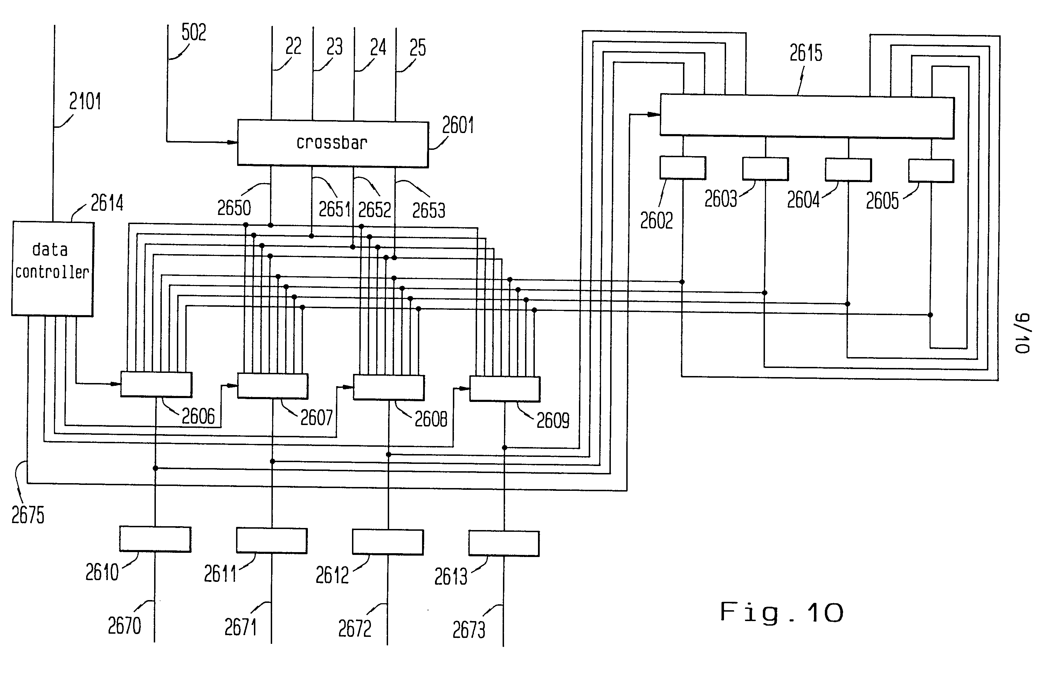

Referring to Fig. 10, a data switch circuit 2615 having a similar function to that of the address switch circuit 2001 is provided in the input side of the preceding address holding registers 2602-2605 of the data switch circuit 26. With the provision of this data switch circuit, the correspondence between address and data is obtained.

An operation of the list vector processing of the second embodiment will be described in detail.

Similarly to the first embodiment, it is assumed that addresses of the respective elements are, from the 0th element, "00B10#", "00B14#", "00B18#", "00B1C, "00B20#", "00B14#", "00B10#", "00B24#", "00B28#" and "00B2C#".

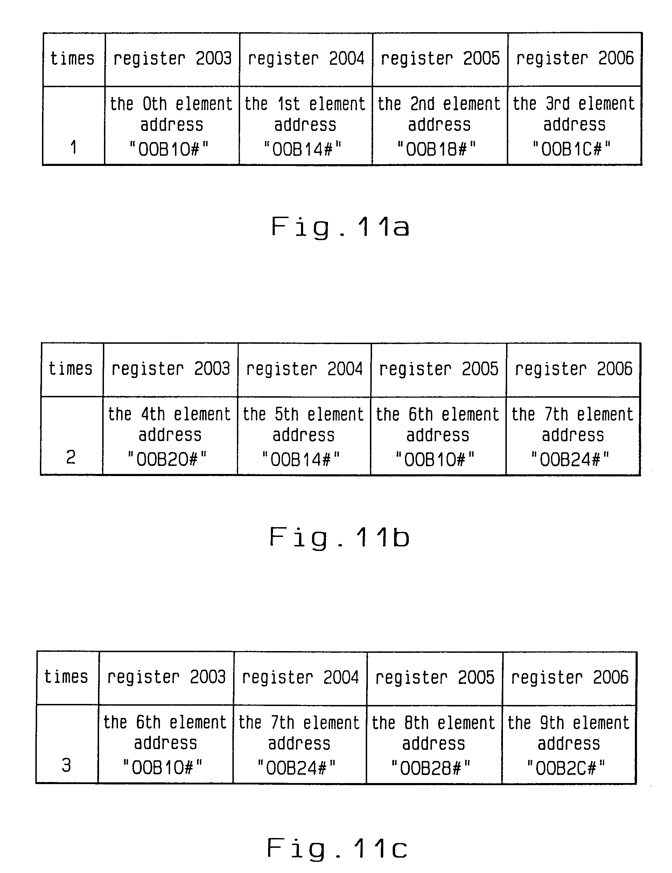

Since there is no address coincidence for the 0th-3rd elements read out from the address buffer 8, the addresses of the 0th to 3rd elements are stored in the address holding registers 2003 to 2006, respectively. A state of the preceding address holding registers 2003-2006 is shown in Fig. 11(a). Among the 4th-7th elements, although there is no address coincidence for the 4th and 7th elements, the addresses of the 5th and 6th elements are coincident. Therefore, it is necessary to register only the 4th and 7th elements in the preceding address holding registers 2003-2006. However, since, in the second embodiment, it is assumed that the address holding registers 2003-2006 can hold 4 addresses at most, the addresses of the 0th and 1st elements are erased when the addresses of the 4th and 7th elements are set therein. Therefore, the addresses of the 4th-7th elements are held therein as shown in Fig. 11(b). Finally, since there is no address coincidence for the 8th and 9th elements, the oldest addresses of the 4th and 5th elements are invalidated and the addresses of the 6th-9th elements are stored in the address holding registers 2004-2006 as shown in Fig. 11(c).

The data read out from the storage 18 is switched by the crossbar 2601 and supplied to the selectors 2606-2609. The data of the 0th element is selected by the selector 2606 through the output port 2650, held in the data register 2610 and supplied to the preceding data holding register 2602 through the data switch circuit 2615. Similarly, the data of the 1st element is selected by the selector 2607 through the output port 2651, held in the data register 2611 and supplied to the preceding data holding register 2602 through the data switch circuit 2615. The data of the 2nd element is selected by the selector 2608 through the output port 2652, held in the data register 2612 and supplied to the preceding data holding register 2602 through the data switch circuit 2615. The data of the 3rd element is selected by the selector 2609 through the output port 2653, held in the data register 2613 and supplied to the preceding data holding register 2603 through the data switch circuit 2615.

The data of the 4th element is selected by the selector 2606 through the output port 2650. Since the data of the 5th element coincides in address with the 1st element data, the data of the preceding data holding register 2603 is selected by the selector 2607. Since the data of the 6th element coincides in address with the 0th element data, the data of the preceding data holding register 2602 is selected by the selector 2608. The data of the 7th element is selected from the output port 2653 by the selector 2609. The data of the 4th element selected by the selector 2606 is held in the data register 2610 and in the preceding data holding register 2602 through the data switch circuit 2615. The data of the 5th element selected by the selector 2607 is held in the data register 2611 and in the preceding data holding register 2603 through the data switch circuit 2615. The data of the 6th element selected by the selector 2608 is held in the data register 2612 and in the preceding data holding register 2604 through the data switch circuit 2615. The data of the 7th element selected by the selector 2609 is held in the data register 2613 and in the preceding data holding register 2605 through the data switch circuit 2615. For the 8th and 9th elements, since there is no coincident element, the 8th element is read out from the storage 18 and selected by the selector 2606 through the output port 2650 of the crossbar 2601, then, held in the data register 2610 and supplied to the data switch circuit 2615. The 9th element is also read out from the storage 18 and selected by the selector 2607 through tge output port 2651 of the crossbar 2601.

The preceding data holding register 2602 holds the data of the 6th element held in the preceding data holding register 2604 through the data switch circuit 2615. Further, the data holding register 2603 holds the data of the 7th element held in the preceding data holding register 2605 through the data switch circuit 2615. The preceding data holding register 2604 holds the data of the 8th element selected by the selector 2608 through the data switch circuit 2615. The preceding data holding register 2605 holds the data of the 9th element selected by the selector 2609 through the data switch circuit 2615.

As is clear from the foregoing, in the vector processor of the present invention, memory access to the same address in a list vector access is not issued every time and, instead thereof, data read out by the first issued memory access is shared. Therefore, the memory bank conflict which occurs when the same address is accessed frequently is relaxed, leading to an improvement of the memory access performance.

## Claims

1. A vector processor including storage means (18) constructed with a plurality of memory banks and vector processing means (7) having a function of accessing the storage means using a vector data as an address for producing a memory access request, characterised in that the vector processor comprises:
address coincidence detection means (20) for holding an address history of a plurality of preceding memory accesses from the vector processing means (7) and detecting a coincidence of addresses of the plurality of preceding memory accesses with an address of a succeeding memory access; and
request switch means (13) for supplying only memory access having address for which an address coincidence is not detected by the address coincidence detection means (20).

2. The vector processor claimed in claim 1, wherein the address coincidence detection means (20) comprises:
a plurality of preceding address holding registers (2003-2006) for holding address histories of a plurality of preceding memory accesses from the vector processing means (7); and
a plurality of address comparator circuits (2007-2010) for detecting a coincidence of addresses of the plurality of preceding memory accesses held in the plurality of the preceding address holding registers (2003-2006) with addresses of succeeding memory accesses.

3. The vector processor claimed in claim 1, wherein the address coincidence detection means (20) comprises:
a plurality of preceding address holding registers (2003-2006) for holding different address histories of a plurality of preceding memory accesses from the vector processing means (7);
address switch means (2001) for supplying the plurality of preceding memory accesses from the vector processing means (7) to any one of the preceding address holding registers (2003-2006); and
a plurality of address comparator circuits (2007-2010) for detecting a coincidence of addresses of the plurality of preceding memory accesses held in the plurality of the preceding address holding registers (2003-2006) with addresses of succeeding memory accesses.

4. The vector processor claimed in claim 1, further comprising:
data switch means (26) for holding data histories from the storage means (18) correspondingly to the plurality of the preceding memory accesses held in the address coincidence detection means (20) and supplying data held as the history of the data to the vector processing means (7) for memory accesses whose address coincidence is detected by the address coincidence detection means (20) and data from the storage means (18) to the vector processing means (7) for memory accesses whose address coincidence is not detected by the address coincidence detection means (20).

5. The vector processor claimed in claim 4, wherein
the address coincidence detection means (20) comprises a plurality of preceding address holding registers (2003-2006) for holding address histories of a plurality of preceding memory accesses from the vector processing means (7); and
the data switch means (26) comprises a plurality of preceding data holding registers (2602-2605) for holding data histories from the storage means (18) corresponding to a plurality of preceding memory accesses.

6. The vector processor claimed in claim 4, wherein the address coincidence detection means (20) comprises:
a plurality of preceding address holding registers (2003-2006) for holding different address histories of a plurality of preceding memory accesses from the vector processing means (7);
address switch means (2001) for supplying the plurality of preceding memory accesses from the vector processing means (7) to any one of the preceding address holding registers (2003-2006); and
a plurality of address comparator circuits (2007-2010) for detecting a coincidence of addresses of the plurality of preceding memory accesses held in the plurality of the preceding address holding registers (2003-2006) with addresses of succeeding memory accesses,
and wherein
the data switch means (26) comprises a plurality of preceding data holding registers (2602-2605) for holding data histories from the storage means (18) corresponding to the plurality of the preceding memory accesses held in the preceding address holding registers (2003-2006).

7. The vector processor claimed in claim 5, further comprising:
bank managing means (19) for checking bank conflict for addresses of a plurality of memory accesses from the vector processing means (7), and
wherein
the request switch means (13) postpones access to the storage means (18) for memory access for which an occurrence of bank conflict is detected by the bank managing means (19).

8. The vector processor claimed in claim 6, further comprising:
bank managing means (19) for checking bank conflict for addresses of a plurality of memory accesses from the vector processing means (7), and
wherein
the request switch means (13) postpones access to the storage means (18) for memory access for which an occurrence of bank conflict is detected by the bank managing means (19).
